# EUROPEAN PATENT APPLICATION

(11) **EP 4 546 015 A1**
(43) Date of publication of application: **30.04.2025**
(21) Application number: 22955588.3
(22) Date of filing: 05.12.2022
(51) Int. Cl.: G01V 1/30

(54) **CHRONOSTRATIGRAPHIC-DOMAIN STRATIGRAPHIC SEDIMENTARY CYCLE ANALYSIS METHOD AND APPARATUS**

(30) Priority: 19.08.2022 CN 202210999543
(71) Applicant: China National Petroleum Corporation, Beijing 100007 (CN); BGP Inc., China National Petroleum Corporation, Hebei 072751 (CN); CNPC Exploration Software Co., Ltd, Beijing 100080 (CN)
(72) Inventor: CHEN, Maoshan, Baoding, Hebei 072751 (CN); YU, Haisheng, Baoding, Hebei 072751 (CN); CAO, Laisheng, Baoding, Hebei 072751 (CN); DENG, Li, Baoding, Hebei 072751 (CN); LI, Hong, Baoding, Hebei 072751 (CN); HUANG, Yan, Baoding, Hebei 072751 (CN)
(74) Representative: Ström & Gulliksson AB
(86) International application number: PCT/CN2022/136621
(87) International publication number: WO 2024/036819

(57) **Abstract**

Embodiments of the present invention provide a method and apparatus for stratigraphic sedimentary cycle analysis in chronostratigraphic domain, and belong to the technical field of seismic signal processing. The method includes: performing multi-horizon tracking on seismic volumes by utilizing a horizon tracking technology so as to obtain a chronostratigraphic volume; transforming all horizons in the chronostratigraphic volume from time to the chronostratigraphic domain; extracting a sedimentary discontinuity or stratum erosion amount sequence based on end point positions of respective horizons in the chronostratigraphic domain; converting the sedimentary discontinuity or stratum erosion amount sequence into a stratigraphic sedimentary cycle curve; and obtaining a stratigraphic sedimentary cycle sequence based on the stratigraphic sedimentary cycle curve. The method and apparatus for stratigraphic sedimentary cycle analysis in the chronostratigraphic domain of the present invention have the advantages of effectively improving the accuracy and objectiveness of sequence stratigraphic analysis, and improving the efficiency and precision of seismic interpretation.

## Description

### Field of the Invention

The present invention relates to the technical field of seismic signal processing, and particularly, to a method for stratigraphic sedimentary cycle analysis in chronostratigraphic domain, an apparatus for stratigraphic sedimentary cycle analysis in chronostratigraphic domain, and a machine-readable storage medium.

### Background of the Invention

Strata are the general term for all stratified rocks on the surface of the Earth or in the lithosphere, and are a layer or a group of rock strata with some consistent or similar lithological and petrophysics characteristics and distinct differences from their upper and lower layers. The strata have the main types of volcanogenic strata, metamorphic strata, and sedimentary strata. The strata can be separated by distinct layers or sedimentary discontinuities, or by indistinct characteristic boundaries such as lithology, fossil content, mineral or chemical composition, and petrophysics properties.

Generally, the sedimentary strata are formations where energy mineral resources such as oil and natural gas are enriched, and are of great significance for the exploration and development of the mineral resources such as oil and natural gas.

Compared to the volcanogenic and the metamorphic strata, the most prominent feature of the sedimentary strata is their rhythmicity, that is, the lithology and petrophysics properties (such as grain size and porosity) of the sedimentary strata often exhibit regular and alternating changes. For example, in clastic sedimentary strata, sandstone and mudstone formations are usually deposited alternately, and meanwhile, the petrophysics properties of the strata also exhibit an alternating change characteristic.

Due to the periodicity of sedimentary tectonic movements, the sea (lake) level exhibits regular fluctuations, resulting in changes in physical and chemical properties of rocks in the strata, manifested as a cyclic characteristic of stratum sedimentation. Geophysical datasets (including seismic volumes, logging datasets, etc.) is the geophysical response of lithology and petrophysics properties, which leads to regular changes in frequency spectrum of seismic waveforms. A time-frequency analysis technology can expand one-dimensional time-domain seismic wave signals into two-dimensional time-frequency domain information, explicitly expressing cyclic characteristics of the strata. Therefore, sedimentary cyclic structural characteristics inside sedimentary bodies can be clearly discovered in a frequency spectrogram.

Seismic signals are the seismic response of underground strata (seismic waves undergo reflection, refraction, or transmission or other phenomena at interfaces of the strata), and carry rich stratum sedimentation characteristics. Analyzing and excavating the stratum sedimentation characteristics are an important content for seismic interpretation, which is of great significance for oil and natural gas exploration and development.

However, the existing analysis of the stratum sedimentation characteristics mainly relies on manual interpretation of geophysical data such as seismic and well logging, which is inefficient, inaccurate, and susceptible to various factors, leading to less objective analysis results; and similar studies have been conducted using a seismic time-frequency analysis technology and attempts have been made to analyze stratigraphic sedimentary cycles, but when the signal-to-noise ratio of seismic volumes is low, the accuracy of time-frequency analysis results is low and the results are not stable enough.

Due to the fact that chronostratigraphic volumes can accurately represent the spatial morphology of the strata, if the strata continue to deposit and have not undergone erosion, corresponding horizons in the chronostratigraphic volumes are continuous. However, when the strata are missing, the corresponding horizons will experience interruption and pinching-out phenomena. From the perspective of the entire stratum sedimentation history, the phenomenon of alternating continuity and pinching-out is a manifestation of the stratigraphic sedimentary cycles. Therefore, based on the erosion amount of the horizons in the chronostratigraphic volumes, sedimentary cycle analysis can be achieved, providing another means for the analysis of the stratigraphic sedimentary cycles.

### Summary of the Invention

The objective of embodiments of the present invention is to provide a method and apparatus for stratigraphic sedimentary cycle analysis in chronostratigraphic domain. The method and apparatus for stratigraphic sedimentary cycle analysis in chronostratigraphic domain are used to solve the above problems that the analysis of stratum sedimentation characteristics mainly relies on manual interpretation of geophysical data such as seismic and well logging, which is inefficient, inaccurate, and susceptible to various factors, leading to less objective analysis results, and when the signal-to-noise ratio of seismic volumes is low, the accuracy of time-frequency analysis results is low and the results are not stable enough.

To implement the above objective, an embodiment of the present invention provides a method for stratigraphic sedimentary cycle analysis in chronostratigraphic domain, including:
performing multi-horizon tracking on seismic volumes by utilizing a horizon tracking technology so as to obtain a chronostratigraphic volume;
transforming all horizons in the chronostratigraphic volume from time to the chronostratigraphic domain;
extracting a sedimentary discontinuity or stratum erosion amount sequence based on end point positions of respective horizons in the chronostratigraphic domain;
converting the sedimentary discontinuity or stratum erosion amount sequence into a stratigraphic sedimentary cycle curve; and
obtaining a stratigraphic sedimentary cycle sequence based on the stratigraphic sedimentary cycle curve.

Optionally, transforming all the horizons in the chronostratigraphic volume from time to the chronostratigraphic domain comprises:
transforming all the horizons in the chronostratigraphic volume from the time to the chronostratigraphic domain by utilizing a full-horizon space correction technology.

Optionally, transforming all the horizons in the chronostratigraphic volume from the time to the chronostratigraphic domain by utilizing the full-horizon space correction technology comprises:
determining a reference point in a seismic work area of the chronostratigraphic volume, and making a vertical line based on the reference point;
for each horizon in the chronostratigraphic volume:
   if the vertical line and the horizon have an intersection, a horizon value where the intersection is located is used as a reference horizon value of the horizon; and
   if the vertical line and the horizon have no intersection, a reference horizon value of the horizon is obtained using a linear interpolation method;
   obtaining a reference horizon value sequence based on the reference horizon value of each horizon; and
   replacing horizon values of remaining positions in each horizon with the reference horizon value corresponding to the horizon based on the reference horizon value sequence.

Optionally, the reference point is a CMP at a position with a maximum sedimentary stratum thickness or a center of the seismic work area.

Optionally, extracting the sedimentary discontinuity or stratum erosion amount sequence based on the end point positions of respective horizons in the chronostratigraphic domain comprises:
extracting the sedimentary discontinuity or stratum erosion amount sequence based on a leftmost end point position and a rightmost end point position of respective horizons in the chronostratigraphic domain.

Optionally, obtaining the stratigraphic sedimentary cycle sequence based on the stratigraphic sedimentary cycle curve comprises:
performing normalization and filtering on the stratigraphic sedimentary cycle curve in sequence to obtain a processed stratigraphic sedimentary cycle curve;
determining waveform feature points on the processed stratigraphic sedimentary cycle curve;
based on the waveform feature points, dividing a stratum into a plurality of stratigraphic sedimentary cycle segments connected end to end, and determining a cycle type of each stratigraphic sedimentary cycle segment; and
converting the stratigraphic sedimentary cycle curve into the stratigraphic sedimentary cycle sequence based on the cycle types.
Optionally, the waveform feature points comprise peaks, valleys and zero-crossing points, and the cycle types comprise normal cycle and reverse cycle; and
based on the waveform feature points, dividing the stratum into the plurality of stratigraphic sedimentary cycle segments connected end to end, and determining the cycle type of each stratigraphic sedimentary cycle segment comprise:
   determining a stratum between two adjacent zero-crossing points as a stratigraphic sedimentary cycle segment;
   determining, if an extreme point of the stratigraphic sedimentary cycle segment is a peak, the cycle type of the stratigraphic sedimentary cycle segment as a normal cycle; and
   determining, if an extreme point of the stratigraphic sedimentary cycle segment is a valley, the cycle type of the stratigraphic sedimentary cycle segment as a reverse cycle.

Optionally, converting the stratigraphic sedimentary cycle curve into the stratigraphic sedimentary cycle sequence based on the cycle types comprises:
for each stratigraphic sedimentary cycle segment:
constructing a regular triangle within the stratigraphic sedimentary cycle segment if the cycle type of the stratigraphic sedimentary cycle segment is the normal cycle;
constructing an inverted triangle within the stratigraphic sedimentary cycle segment if the cycle type of the stratigraphic sedimentary cycle segment is the reverse cycle; and
forming the stratigraphic sedimentary cycle sequence based on the constructed regular triangle and/or inverted triangle.

An embodiment of the present invention further provides an apparatus for stratigraphic sedimentary cycle analysis in chronostratigraphic domain, including:
a chronostratigraphic volume analyzing module, configured to perform multi-horizon tracking on seismic volumes by utilizing a horizon tracking technology so as to obtain a chronostratigraphic volume;
a chronostratigraphic domain transforming module, configured to transform all horizons in the chronostratigraphic volume from time to the chronostratigraphic domain;
a sedimentary discontinuity and stratum erosion amount extracting module, configured to extract a sedimentary discontinuity or stratum erosion amount sequence based on end point positions of respective horizons in the chronostratigraphic domain;
a stratigraphic sedimentary cycle curve converting module, configured to convert the sedimentary discontinuity or stratum erosion amount sequence into a stratigraphic sedimentary cycle curve; and
a stratigraphic sedimentary cycle sequence outputting module, configured to obtain a stratigraphic sedimentary cycle sequence based on the stratigraphic sedimentary cycle curve.

In another aspect, the present invention provides a machine-readable storage medium, storing instructions thereon, wherein the instructions are used to cause a machine to execute the above method for stratigraphic sedimentary cycle analysis in chronostratigraphic domain.

By means of the above technical solution, the present invention has the following beneficial effects:
in the present technical solution, multi-horizon tracking is performed on the seismic volumes by utilizing the horizon tracking technology so as to obtain the chronostratigraphic volume; then all horizons in the chronostratigraphic volume are transformed from time to the chronostratigraphic domain; the sedimentary discontinuity or stratum erosion amount sequence is extracted based on the end point positions of respective horizons in the chronostratigraphic domain; afterwards, the sedimentary discontinuity or stratum erosion amount sequence is converted into the stratigraphic sedimentary cycle curve through linear interpolation; and finally, the stratigraphic sedimentary cycle sequence is obtained based on the stratigraphic sedimentary cycle curve. By means of the above method, sedimentary cycle analysis can be achieved by utilizing the erosion amount of the horizons, the analysis efficiency, accuracy and objectiveness are high, and thus the efficiency and precision of seismic interpretation can be improved, which is helpful for the sedimentary characteristic analysis of the strata, and then discovering potential oil and natural gas reservoirs.

Other features and advantages of the embodiments of the present invention will be described in detail in the subsequent detailed description.

### Brief Description of Drawings

The accompanying drawings are intended to provide a further understanding of embodiments of the present invention, form a part of the description, and are used to explain the embodiments of the present invention together with the following detailed description, but do not constitute a limitation to the embodiments of the present invention. In the accompanying drawings:
Fig. 1 is a flow diagram of a method for stratigraphic sedimentary cycle analysis in the chronostratigraphic domain provided by the present invention.
Fig. 2 is a schematic diagram of a two-dimensional seismic profile provided by the present invention.
Fig. 3 is a schematic diagram of a chronostratigraphic volume obtained based on a seismic volume in Fig. 2 provided by the present invention.
Fig. 4 is a schematic diagram of the chronostratigraphic domain provided by the present invention.
Fig. 5 is a schematic diagram of distribution positions of stratum end points in the chronostratigraphic domain provided by the present invention.
Fig. 6 is a schematic diagram of a stratigraphic sedimentary cycle curve extracted from a chronostratigraphic volume provided by the present invention.
Fig. 7 is a schematic diagram of a stratigraphic sedimentary cycle sequence obtained based on a stratigraphic sedimentary cycle curve provided by the present invention.
Fig. 8 is a schematic structural diagram of an apparatus for stratigraphic sedimentary cycle analysis in the chronostratigraphic domain provided by the present invention.

### Description of Reference Numerals

10-Chronostratigraphic volume analyzing module; 20-Chronostratigraphic domain transforming module;
30-Sedimentary discontinuity and stratum erosion amount extracting module; 40-Stratigraphic sedimentary cycle curve converting module;
50-Stratigraphic sedimentary cycle sequence outputting module.

### Detailed Description of the Embodiments

The detailed description of embodiments of the present invention is described in detail below in combination with the accompanying drawings. It is to be understood that, the detailed description described herein is only used to illustrate and explain the embodiments of the present invention instead of limiting the embodiments of the present invention.

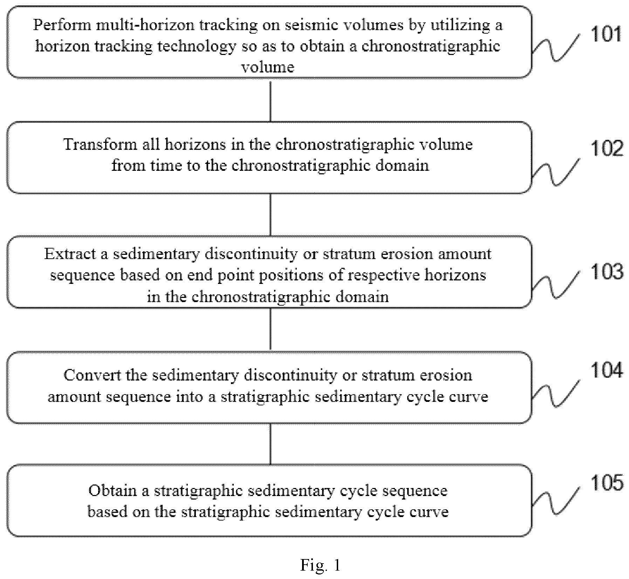

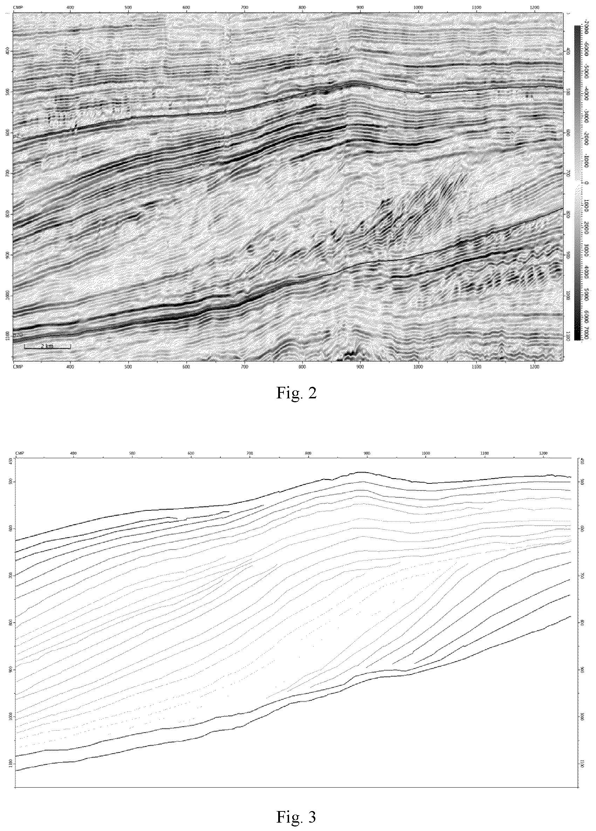

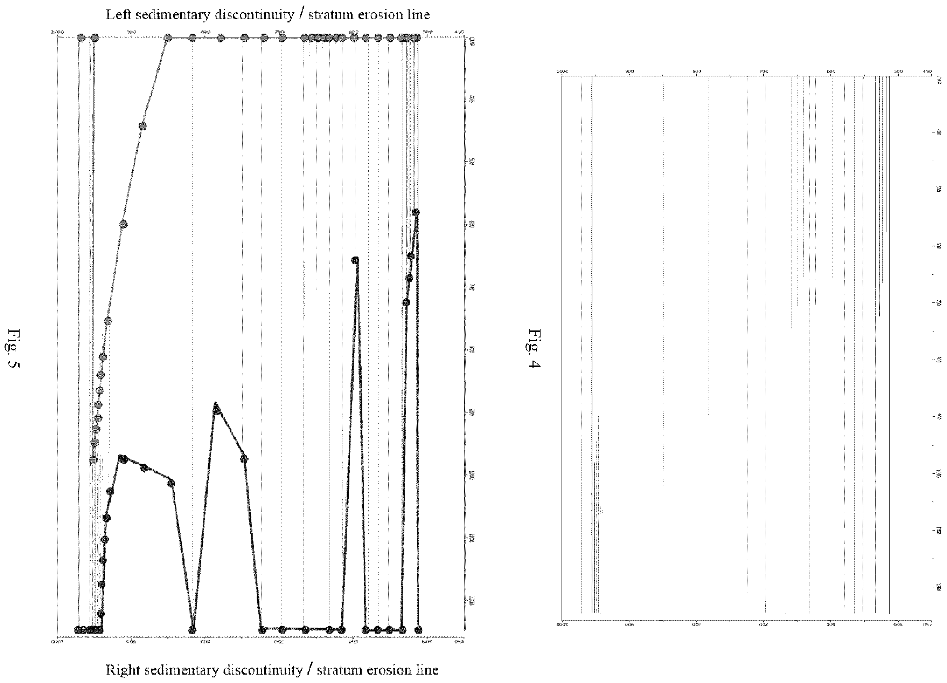

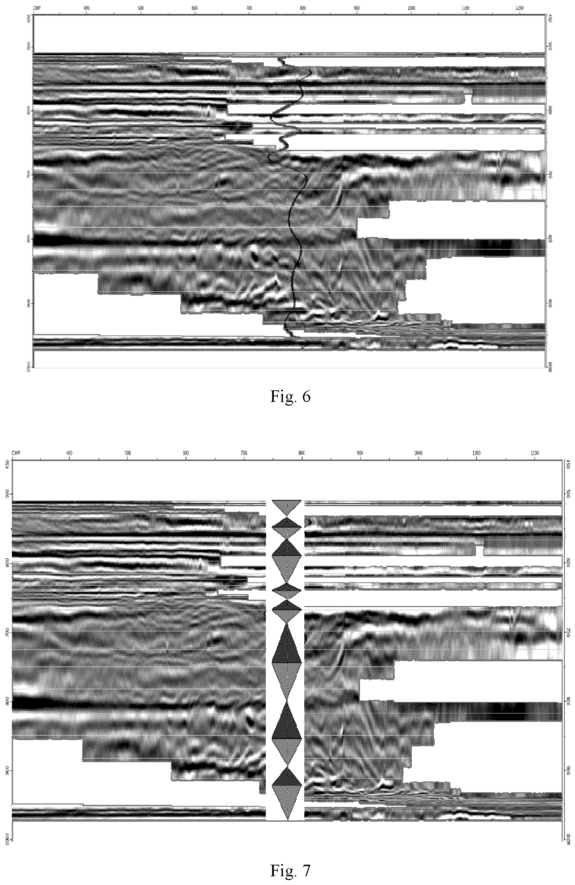

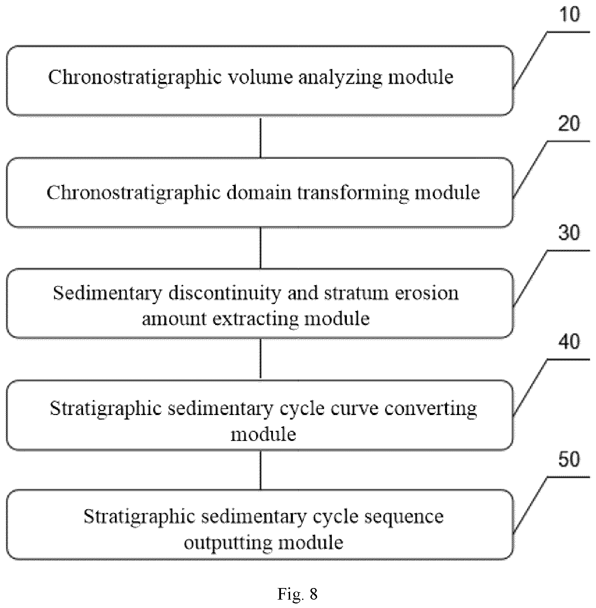

Fig. 1 is a flow diagram of a method for stratigraphic sedimentary cycle analysis in the chronostratigraphic domain provided by the present invention; Fig. 2 is a schematic diagram of a two-dimensional seismic profile provided by the present invention; Fig. 3 is a schematic diagram of a chronostratigraphic volume extracted from a seismic volume in Fig. 2 provided by the present invention; Fig. 4 is a schematic diagram of the chronostratigraphic domain provided by the present invention; Fig. 5 is a schematic diagram of distribution positions of stratum end points in the chronostratigraphic domain provided by the present invention; Fig. 6 is a schematic diagram of a stratigraphic sedimentary cycle curve extracted from a chronostratigraphic volume provided by the present invention; Fig. 7 is a schematic diagram of a stratigraphic sedimentary cycle sequence obtained based on a stratigraphic sedimentary cycle curve provided by the present invention; and Fig. 8 is a schematic structural diagram of an apparatus for stratigraphic sedimentary cycle analysis in the chronostratigraphic domain provided by the present invention.

As shown in Fig. 1 to Fig. 4, an embodiment provides a method for stratigraphic sedimentary cycle analysis in chronostratigraphic domain, including:
step 101, multi-horizon tracking is performed on a seismic volume by utilizing a horizon tracking technology so as to obtain a chronostratigraphic volume;
step 102, all horizons in the chronostratigraphic volume are transformed from time to the chronostratigraphic domain;
step 103, a sedimentary discontinuity or stratum erosion amount sequence is extracted based on end point positions of respective horizons in the chronostratigraphic domain;
step 104, the sedimentary discontinuity or stratum erosion amount sequence is converted into a stratigraphic sedimentary cycle curve; and
step 105, a stratigraphic sedimentary cycle sequence is obtained based on the stratigraphic sedimentary cycle curve.

Specifically, step 101 that simultaneous multi-horizon tracking is performed on the seismic volume to obtain the chronostratigraphic volume means that stratum interface information is extracted from the seismic volume based on the simultaneous multi-horizon tracking technology to form a series of seismic horizons, and all the seismic horizons are orderly combined into a relative chronostratigraphic volume according to a sequence from new strata to old strata.

The chronostratigraphic volume, also called a relative geologic chronostratigraphic volume or a seismic stratigraphic volume, refers to a data volume constituted by the series of seismic horizons extracted from the seismic volume by utilizing stratum reflecting interface characteristics and stratum sedimentation characteristics contained in seismic reflection waves. The data volume is orderly constituted by the series of seismic horizons capable of representing the geological ages of strata in a sequence from new to old, in which the horizons can be used to represent spatial forms and relative geological ages of strata corresponding to the horizons.

Simultaneous multi-horizon tracking refers to a horizon tracking technology which divides an entire seismic work area into a series of blocks, a group of horizons is tracked simultaneously in each block according to a certain sequence, and then the horizons among the blocks are connected orderly and combined into the chronostratigraphic volume.

The chronostratigraphic volume is an isochronous stratigraphy framework volume extracted from the seismic volume on the basis of a "relative chronostratigraphic volume" proposed by Stark et al., (2003). Since each seismic horizon in the chronostratigraphic volume corresponds to a certain stratum reflecting interface underground or a spatial curved surface parallel to the stratum reflecting interface, the chronostratigraphic volume may be used to indicate or describe spatial forms and stratum sedimentation characteristics of strata.

At present, there are mainly two implementing routes for extracting the chronostratigraphic volume from the seismic volume, one is a single-horizon tracking mode, and the other is a multi-horizon tracking mode. The single-horizon tracking mode refers to only tracking one horizon at a time, encrypting the horizons when a horizon interval is greater than a certain threshold value, and then combining these horizons into the chronostratigraphic volume according to a sedimentation sequence of strata where the horizons are located. The multi-horizon tracking mode refers to dividing an entire seismic work area into a series of blocks, tracking a group of horizons simultaneously in each block according to a certain sequence, and then connecting the horizons among the blocks according to a certain rule and combining the horizons into the chronostratigraphic volume. Obviously, the chronostratigraphic volume generated by the multi-horizon tracking mode better meets the stratum sedimentation law than the single-horizon tracking mode.

In step 102, the chronostratigraphic domain is a manner of representing a relative geologic age of a stratum, and is realized by vertically translating all horizon points in respective horizons in a chronostratigraphic volume to the same time (the time corresponds to a unique relative geologic age), each horizon has respective unique relative geologic age attribute which is typically denoted by a horizon number, the smaller the number, the newer a stratum, the larger the number, the older a stratum, and a new stratum is located above an old stratum.

In step 103, by determining end point values of respective horizons in the chronostratigraphic domain, distances between the respective end point values and a boundary of a seismic section can be obtained, by using the distances as sedimentary discontinuity or stratum erosion amounts, the sedimentary discontinuity or stratum erosion amount of each stratum can be obtained, and then the sedimentary discontinuity or stratum erosion amount sequence can be obtained.

In step 104, converting the sedimentary discontinuity or stratum erosion amount sequence into the stratigraphic sedimentary cycle curve includes performing linear interpolation on the sedimentary discontinuity or stratum erosion amount sequence using a linear interpolation algorithm so as to form a uniform sampling curve consistent with a seismic waveform in sampling interval, and the uniform sampling curve is named the stratigraphic sedimentary cycle curve.

In step 105, obtaining the stratigraphic sedimentary cycle sequence based on the stratigraphic sedimentary cycle curve further specifically includes performing processing such as normalization and filtering on the stratigraphic sedimentary cycle curve, and then constructing the stratigraphic sedimentary cycle sequence based on waveform characteristics of the processed stratigraphic sedimentary cycle curve.

Further, transforming all the horizons in the chronostratigraphic volume from time to the chronostratigraphic domain includes:
transforming all the horizons in the chronostratigraphic volume from the time to the chronostratigraphic domain by utilizing a full-horizon space correction technology.

Specifically, the full-horizon space correction technology may be understood as common middle point (CMP) horizon correction, and the horizons are restored to a state before stratum sedimentation according to geologic ages of the strata corresponding to the respective horizons.

Further, transforming all the horizons in the chronostratigraphic volume from the time to the chronostratigraphic domain by utilizing the full-horizon space correction technology includes:
determining a reference point in a seismic work area of the chronostratigraphic volume, and making a vertical line based on the reference point;
for each horizon in the chronostratigraphic volume:
   if the vertical line and the horizon have an intersection, a horizon value where the intersection is located is used as a reference horizon value of the horizon; and
   if the vertical line and the horizon have no intersection, a reference horizon value of the horizon is obtained using a linear interpolation method;
   obtaining a reference horizon value sequence based on the reference horizon value of each horizon; and
   replacing horizon values of remaining positions in each horizon with the reference horizon value corresponding to the horizon based on the reference horizon value sequence.

Specifically, in the present implementation, first, the reference point is determined in the seismic work area of the chronostratigraphic volume, a straight line, usually a vertical line, is made based on the reference point, the straight line vertically extends to the whole seismic section, but since different horizons have the phenomena of being blank or missing in the sedimentation process and total lengths are different, part of the horizons may not have intersections with the vertical line, and therefore, for each horizon in the chronostratigraphic volume, if the vertical line and the horizon have an intersection, the horizon value corresponding to a position where the intersection is located is directly used as the reference horizon value of the horizon; and if the vertical line and the horizon have no intersection (the horizon has blank or missing parts), a virtual intersection between the horizon and the vertical line is determined, and interpolation is performed on a reference horizon value of the virtual intersection using the linear interpolation method, so as to obtain the reference horizon value of each horizon. Then, the reference horizon value sequence is constituted comprehensively by the reference horizon value of each horizon. Finally, the horizon values of the remaining positions in each horizon are replaced with the reference horizon value of the horizon with the horizon as a unit according to the obtained reference horizon value sequence.

Further, the reference point is a CMP at a position with a maximum sedimentary stratum thickness or a center of the seismic work area.

Further, extracting the sedimentary discontinuity or stratum erosion amount sequence based on the end point positions of the respective horizons in the chronostratigraphic domain includes:
extracting the sedimentary discontinuity or stratum erosion amount sequence based on a leftmost end point position and a rightmost end point position of respective horizons in the chronostratigraphic domain.

Specifically, extracting the sedimentary discontinuity or stratum erosion amount sequence based on the leftmost end point position and the rightmost end point position of the respective horizons in the chronostratigraphic domain includes: sequentially counting distances between leftmost horizon points with horizon values being effective values in the respective horizons in the chronostratigraphic domain and a left boundary of the seismic section, and using the distances as left stratum erosion amounts; sequentially counting distances between rightmost horizon points with horizon values being effective values in the respective horizons in the chronostratigraphic volume and a right boundary of the seismic section, and using the distances as right stratum erosion amounts; and then solving a mean value, a minimum value and a maximum value of the left erosion amounts and the right erosion amounts, and respectively combining the values into a mean sedimentary discontinuity or stratum erosion amount sequence, a minimum sedimentary discontinuity or stratum erosion amount sequence and a maximum sedimentary discontinuity or stratum erosion amount sequence. **In** the present implementation, distribution positions of the stratum end points in the chronostratigraphic domain are as shown in Fig. 5.

Further, obtaining the stratigraphic sedimentary cycle sequence based on the stratigraphic sedimentary cycle curve includes:
performing normalization and filtering on the stratigraphic sedimentary cycle curve in sequence to obtain a processed stratigraphic sedimentary cycle curve;
determining waveform feature points on the processed stratigraphic sedimentary cycle curve;
based on the waveform feature points, dividing a stratum into a plurality of stratigraphic sedimentary cycle segments connected end to end, and determining a cycle type of each stratigraphic sedimentary cycle segment; and
converting the stratigraphic sedimentary cycle curve into the stratigraphic sedimentary cycle sequence based on the cycle types.

Specifically, the stratigraphic sedimentary cycle curve obtained through the above method is as shown in Fig. 6. Performing normalization and filtering on the stratigraphic sedimentary cycle curve in sequence to obtain the processed stratigraphic sedimentary cycle curve includes: performing normalization on an original stratigraphic sedimentary cycle curve to obtain a second stratigraphic sedimentary cycle curve, wherein processing content includes: transforming the value range of the stratigraphic sedimentary cycle curve to [-1.0~1.0] using a normalization method; and performing, specifically by using a low-pass filter, filtering on the second stratigraphic sedimentary cycle curve to obtain a third stratigraphic sedimentary cycle curve, and then recognizing waveform feature points in the third stratigraphic sedimentary cycle curve, wherein the waveform feature points refer to sampling points with obvious curvature change features on the stratigraphic sedimentary cycle curve, including extreme points and zero-crossing points, and the extreme points further include two types, namely peaks and valleys. The step of recognizing the waveform feature points specifically includes: (1) deriving the third stratigraphic sedimentary cycle curve to obtain a first-order derivative sequence by using a first-order difference vector operation; (2) processing the first-order derivative sequence of the stratigraphic sedimentary cycle curve to obtain a symbolized first-order derivative sequence by using a symbolic operation; (3) performing flat point filtering on the symbolized first-order derivative sequence, that is, all values of points with symbolized first-order derivatives of 0 are set to be the same as gradients (directions or trends) of slopes where they are located; (4) perform the first-order difference vector operation on the symbolized first-order derivative sequence again to form a second-order derivative sequence; (5) marking points in the second-order derivative sequence with sampling point values of -2.0 and corresponding seismic amplitudes greater than 0.1 as peaks (maximum values), and points with sampling point values of 2.0 and amplitudes less than -0.1 as valleys (minimum values); and (6) marking midpoints between the peaks and the valleys, as well as midpoints between the valleys and the peaks, as zero-crossing points.

Further, the waveform feature points include the peaks, the valleys and the zero-crossing points, and the cycle types include normal cycle and reverse cycle.

Based on the waveform feature points, dividing the stratum into the plurality of stratigraphic sedimentary cycle segments connected end to end, and determining the cycle type of each stratigraphic sedimentary cycle segment include:
determining a stratum between two adjacent zero-crossing points as a stratigraphic sedimentary cycle segment;
determining, if an extreme point of the stratigraphic sedimentary cycle segment is a peak, the cycle type of the stratigraphic sedimentary cycle segment as a normal cycle; and
determining, if an extreme point of the stratigraphic sedimentary cycle segment is a valley, the cycle type of the stratigraphic sedimentary cycle segment as a reverse cycle.

Specifically, in the present implementation, the zero-crossing points are regarded as stratum interfaces, thus a stratum between two adjacent zero-crossing points may be determined as a stratigraphic sedimentary cycle segment, and they must be a unique maximum value between two adjacent zero-crossing points, if the unique extreme point is a peak, the cycle type is determined as the normal cycle, otherwise, it is determined as the reverse cycle.

Further, converting the stratigraphic sedimentary cycle curve into the stratigraphic sedimentary cycle sequence based on the cycle types includes:
for each stratigraphic sedimentary cycle segment:
constructing a regular triangle within the stratigraphic sedimentary cycle segment if the cycle type of the stratigraphic sedimentary cycle segment is the normal cycle;
constructing an inverted triangle within the stratigraphic sedimentary cycle segment if the cycle type of the stratigraphic sedimentary cycle segment is the reverse cycle; and
forming the stratigraphic sedimentary cycle sequence based on the constructed regular triangle and/or inverted triangle.

Specifically, the stratigraphic sedimentary cycle sequence is a triangular stratigraphic sedimentary cycle sequence, and obtaining the triangular stratigraphic sedimentary cycle sequence includes the specific steps that: a triangle is drawn within a corresponding cycle segment according to the type of each stratigraphic sedimentary cycle segment, and the respective triangles are connected end to end so as to form the triangular stratigraphic sedimentary cycle sequence. If the stratigraphic sedimentary cycle segment is a normal cycle, a regular triangle is drawn, the top of the triangle is consistent with a top interface of the stratigraphic sedimentary cycle segment, and the bottom of the triangle is consistent with a bottom interface of the stratigraphic sedimentary cycle segment. If the stratigraphic sedimentary cycle segment is a reverse cycle, an inverted triangle is drawn, the top of the triangle is consistent with a top interface of the stratigraphic sedimentary cycle segment, and the bottom of the triangle is consistent with a bottom interface of the cycle segment. The triangular stratigraphic sedimentary cycle sequence obtained through the above method is as shown in Fig. 7.

As shown in Fig. 8, an implementation of the present invention further provides an apparatus for stratigraphic sedimentary cycle analysis in chronostratigraphic domain, including:
a chronostratigraphic volume analyzing module 10, configured to perform multi-horizon tracking on seismic volumes by utilizing a horizon tracking technology so as to obtain a chronostratigraphic volume;
a chronostratigraphic domain transforming module 20, configured to transform all horizons in the chronostratigraphic volume from time to the chronostratigraphic domain;
a sedimentary discontinuity and stratum erosion amount extracting module 30, configured to extract a sedimentary discontinuity or stratum erosion amount sequence based on end point positions of respective horizons in the chronostratigraphic domain;
a stratigraphic sedimentary cycle curve converting module 40, configured to convert the sedimentary discontinuity or stratum erosion amount sequence into a stratigraphic sedimentary cycle curve; and
a stratigraphic sedimentary cycle sequence outputting module 50, configured to obtain a stratigraphic sedimentary cycle sequence based on the stratigraphic sedimentary cycle curve.

Specifically, in the present implementation, the chronostratigraphic volume analyzing module 10 is a computer software module configured to perform multi-horizon tracking on the seismic volume by utilizing the horizon tracking technology so as to obtain the chronostratigraphic volume; the chronostratigraphic domain transforming module 20 is a computer software module configured to transform all the horizons in the chronostratigraphic volume from the time to the chronostratigraphic domain; the sedimentary discontinuity and stratum erosion amount extracting module 30 is a computer software module configured to extract the sedimentary discontinuity or stratum erosion amount sequence based on the end point positions of the respective horizons in the chronostratigraphic domain; the stratigraphic sedimentary cycle curve converting module 40 is a computer software module configured to convert the sedimentary discontinuity or stratum erosion amount sequence into the stratigraphic sedimentary cycle curve; and the stratigraphic sedimentary cycle sequence outputting module 50 is a computer software module configured to obtain the stratigraphic sedimentary cycle sequence based on the stratigraphic sedimentary cycle curve.

An implementation of the present invention further provides a machine-readable storage medium, storing instructions thereon, wherein the instructions are used to cause a machine to execute the above method for stratigraphic sedimentary cycle analysis in chronostratigraphic domain.

Those skilled in the art will appreciate that the embodiments of the present application may be provided as methods, apparatuses, or computer program products. Therefore, the present application may take the form of a full hardware embodiment, a full software embodiment, or an embodiment combining software and hardware. Besides, the present application may adopt the form of a computer program product implemented on one or more computer available storage media (including but not limited to a disk memory, a CD-ROM, an optical memory and the like) containing computer available program codes.

The present application is described with reference to the flow diagram and/or block diagram of the method, apparatus, and computer program product according to the embodiments of the present application. It should be understood that each flow and/or block in the flow diagram and/or block diagram and the combination of flows and/or blocks in the flow diagram and/or block diagram can be implemented by computer program instructions. These computer program instructions can be provided to processors of a general-purpose computer, a special-purpose computer, an embedded processor or other programmable data processing devices to generate a machine, so that instructions executed by processors of a computer or other programmable data processing devices generate an apparatus for implementing the functions specified in one or more flows of the flow diagram and/or one or more blocks of the block diagram.

These computer program instructions can also be stored in a computer-readable memory capable of guiding a computer or other programmable data processing devices to work in a specific manner, so that instructions stored in the computer-readable memory generate a manufacturing product including an instruction apparatus, and the instruction apparatus implements the functions specified in one or more flows of the flow diagram and/or one or more blocks of the block diagram.

These computer program instructions can also be loaded on a computer or other programmable data processing devices, so that a series of operation steps are executed on the computer or other programmable devices to produce computer-implemented processing, and thus, the instructions executed on the computer or other programmable devices provide steps for implementing the functions specified in one or more flows of the flow diagram and/or one or more blocks of the block diagram.

Finally, it is to be noted that: the above embodiments are only used to illustrate the technical solution of the present invention and not to limit it, and although the present invention has been described in detail with reference to the above embodiments, those ordinarily skilled in the art should understand that: modifications or equivalent substitutions can still be made to the specific implementations of the present invention, and any modifications or equivalent substitutions that do not depart from the spirit and scope of the present invention should be covered within the scope of protection of the claims of the present invention.

## Claims

1. A method for stratigraphic sedimentary cycle analysis in chronostratigraphic domain, comprising:
performing multi-horizon tracking on seismic volumes by utilizing a horizon tracking technology so as to obtain a chronostratigraphic volume;
transforming all horizons in the chronostratigraphic volume from time to the chronostratigraphic domain;
extracting a sedimentary discontinuity or stratum erosion amount sequence based on end point positions of respective horizons in the chronostratigraphic domain;
converting the sedimentary discontinuity or stratum erosion amount sequence into a stratigraphic sedimentary cycle curve; and
obtaining a stratigraphic sedimentary cycle sequence based on the stratigraphic sedimentary cycle curve.

2. The method according to claim 1, wherein transforming all the horizons in the chronostratigraphic volume from time to the chronostratigraphic domain comprises:
transforming all the horizons in the chronostratigraphic volume from the time to the chronostratigraphic domain by utilizing a full-horizon space correction technology.

3. The method according to claim 2, wherein transforming all the horizons in the chronostratigraphic volume from the time to the chronostratigraphic domain by utilizing the full-horizon space correction technology comprises:
determining a reference point in a seismic work area of the chronostratigraphic volume, and making a vertical line based on the reference point;
for each horizon in the chronostratigraphic volume:
if the vertical line and the horizon have an intersection, a horizon value where the intersection is located is used as a reference horizon value of the horizon; and
if the vertical line and the horizon have no intersection, a reference horizon value of the horizon is obtained using a linear interpolation method;
obtaining a reference horizon value sequence based on the reference horizon value of each horizon; and
replacing horizon values of remaining positions in each horizon with the reference horizon value corresponding to the horizon based on the reference horizon value sequence.

4. The method according to claim 3, wherein the reference point is a CMP at a position with a maximum sedimentary stratum thickness or a center of the seismic work area.

5. The method according to claim 1, wherein extracting the sedimentary discontinuity or stratum erosion amount sequence based on the end point positions of respective horizons in the chronostratigraphic domain comprises:
extracting the sedimentary discontinuity or stratum erosion amount sequence based on a leftmost end point position and a rightmost end point position of respective horizons in the chronostratigraphic domain.

6. The method according to claim 1, wherein obtaining the stratigraphic sedimentary cycle sequence based on the stratigraphic sedimentary cycle curve comprises:
performing normalization and filtering on the stratigraphic sedimentary cycle curve in sequence to obtain a processed stratigraphic sedimentary cycle curve;
determining waveform feature points on the processed stratigraphic sedimentary cycle curve;
based on the waveform feature points, dividing a stratum into a plurality of stratigraphic sedimentary cycle segments connected end to end, and determining a cycle type of each stratigraphic sedimentary cycle segment; and
converting the stratigraphic sedimentary cycle curve into the stratigraphic sedimentary cycle sequence based on the cycle types.

7. The method according to claim 6, wherein the waveform feature points comprise peaks, valleys and zero-crossing points, and the cycle types comprise normal cycle and reverse cycle; and
based on the waveform feature points, dividing the stratum into the plurality of stratigraphic sedimentary cycle segments connected end to end, and determining the cycle type of each stratigraphic sedimentary cycle segment comprise:
determining a stratum between two adjacent zero-crossing points as a stratigraphic sedimentary cycle segment;
determining, if an extreme point of the stratigraphic sedimentary cycle segment is a peak, the cycle type of the stratigraphic sedimentary cycle segment as a normal cycle; and
determining, if an extreme point of the stratigraphic sedimentary cycle segment is a valley, the cycle type of the stratigraphic sedimentary cycle segment as a reverse cycle.

8. The method according to claim 7, wherein converting the stratigraphic sedimentary cycle curve into the stratigraphic sedimentary cycle sequence based on the cycle types comprises:
for each stratigraphic sedimentary cycle segment:
constructing a regular triangle within the stratigraphic sedimentary cycle segment if the cycle type of the stratigraphic sedimentary cycle segment is the normal cycle;
constructing an inverted triangle within the stratigraphic sedimentary cycle segment if the cycle type of the stratigraphic sedimentary cycle segment is the reverse cycle; and
forming the stratigraphic sedimentary cycle sequence based on the constructed regular triangle and/or inverted triangle.

9. An apparatus for stratigraphic sedimentary cycle analysis in chronostratigraphic domain, comprising:
a chronostratigraphic volume analyzing module, configured to perform multi-horizon tracking on seismic volumes by utilizing a horizon tracking technology so as to obtain a chronostratigraphic volume;
a chronostratigraphic domain transforming module, configured to transform all horizons in the chronostratigraphic volume from time to the chronostratigraphic domain;
a sedimentary discontinuity and stratum erosion amount extracting module, configured to extract a sedimentary discontinuity or stratum erosion amount sequence based on end point positions of respective horizons in the chronostratigraphic domain;
a stratigraphic sedimentary cycle curve converting module, configured to convert the sedimentary discontinuity or stratum erosion amount sequence into a stratigraphic sedimentary cycle curve; and
a stratigraphic sedimentary cycle sequence outputting module, configured to obtain a stratigraphic sedimentary cycle sequence based on the stratigraphic sedimentary cycle curve.

10. A machine-readable storage medium, storing instructions thereon, wherein the instructions are used to cause a machine to execute the method for stratigraphic sedimentary cycle analysis in chronostratigraphic domain according to any one of claims 1-8.
